# EUROPÄISCHE PATENTSCHRIFT

(11) **EP 1 483 093 B1**
(45) Veröffentlichungstag und Bekanntmachung des Hinweises auf die Patenterteilung: **10.08.2005**
(21) Anmeldenummer: 03706120.7
(22) Anmeldetag: 11.03.2003
(51) Int. Cl.: B29B 7/42, B29B 17/00, B29C 47/10, B29B 7/60, B02C 18/24, B02C 18/38

(54) **VORRICHTUNG ZUR ZERKLEINERUNG VON MATERIALIEN**
DEVICE FOR THE COMMINUTION OF MATERIALS
DISPOSITIF DE BROYAGE DE PRODUITS

(30) Priorität: 12.03.2002 AT 3762002
(43) Veröffentlichungstag der Anmeldung: 08.12.2004
(73) Patentinhaber: STARLINGER & CO. GESELLSCHAFT MBH, 1060 Wien (AT)
(72) Erfinder: HUEMER, Angelika, A-1060 Wien (AT); FELLINGER, Markus, A-4073 Wilhering (AT); STARLINGER-HUEMER, Franz, deceased (AT)
(74) Vertreter: Margotti, Herwig Franz
(86) Internationale Anmeldenummer: PCT/AT2003/000069
(87) Internationale Veröffentlichungsnummer: WO 2003/076153

(56) Entgegenhaltungen:
- EP-A- 0 329 934
- WO-A-01/47678
- WO-A-01/81058
- DE-A- 3 412 158
- DE-B- 1 166 460
- PATENT ABSTRACTS OF JAPAN vol. 009, no. 084 (M-371), 13. April 1985 (1985-04-13) & JP 59 212219 A (PURAKOO:KK), 1. Dezember 1984 (1984-12-01)

## Beschreibung

Die Erfindung betrifft eine Vorrichtung zur Verdichtung lose gepackter Materialien, insbesondere Kunststoffmaterialien, mit einem in einem Gehäuse angeordneten, zur Drehbewegung um eine Rotationsachse antreibbaren Zerkleinerungs/Förder-Rotorkörper und einem nachgeschalteten Extruder mit einer koaxial zum Zerkleinerungs/Förder-Rotorkörper drehbar angeordneten Extruderschnecke, so dass dem Zerkleinerungs/Förder-Rotorkörper zugeführte Materialien zur Extruderschnecke hin gefördert und gegebenenfalls dabei zerkleinert werden.

Das zu verdichtende Material, meistens Kunststoffgut, wird mittels geeigneter Fördereinrichtungen wie Förderband, Rolleneinzug, Hub-Kipp-Gerät oder manueller Beschickung in einen Aufgabetrichter befördert, in dem das Material mittels Schwerkraft oder einer Andrückvorrichtung auf den Zerkleinerungs/Förder-Rotorkörper gedrückt wird. Das Kunststoffgut wird dabei verdichtet und gegebenenfalls zwischen rotierenden Messern, die am Umfang des Zerkleinerungs/Förder-Rotorkörpers ausgebildet sind, und stehenden Messern, die am Gehäuse ausgebildet sind, zerkleinert. Gleichzeitig wird das verdichtete/zerkleinerte Material stetig axial zur Extruderschnecke weiterbefördert.

Eine solche Vorrichtung ist z. B. aus WO 01/47678 A1 bekannt. Bei dieser Vorrichtung wirkt sich die austragsseitige Lagerung der Schneidwelle negativ auf die Förderwirkung des Kunststoffes aus. Die vorgesehenen Stege zur Haltung des austragsseitigen Lagers stellen ein großes Hindernis für den Materialtransport dar und können zu einer erheblichen Einschränkung des Materialstromes, insbesonders bei leichten und fasrigen Materialien, führen. Darüber hinaus ist das Lager schwer zu warten bzw. sein Austausch nur schwer möglich, da dies nur mit einer kompletten Demontage der angeschlossenen Einrichtungen bzw. einem Ausbau der Schneidwelle zu bewerkstelligen ist. Durch die Einbaulage des Lagers ist es überdies einer erhöhten Temperaturbelastung ausgesetzt, insbesonders wenn die angeschlossene Schnecke eine Extruderschnecke ist.

Aus AT 407971 B ist eine Vorrichtung bekannt, die die oben erwähnte Problematik insofern löst, als die austragsseitige, vom Antrieb abgewandte Lagerung durch die Extruderschnecke selbst gebildet wird und dadurch ein separates austragsseitiges Lager gänzlich entfällt. Diese Lösung hat jedoch den Nachteil, dass es durch die auftretenden Schneidkräfte zu einer sehr großen radialen Belastung der Extruderschnecke und somit zu einem erhöhtem Verschleiß kommt, insbesonders wenn die Einzugsöffnung der Extruderschnecke durch taschenartige Erweiterungen vergrößert wird, die zwar einerseits die Förderleistung des Extruders erhöhen, andererseits jedoch durch die punktuelle Auflage der Schnecke auf den Stegen zu weiter gesteigertem Verschleiß führen. Darüber hinaus ist die antriebsseitige Lagerung der Schneidwelle teuer und kann bei einer funktionstüchtigen Maschine nur als weit auskragender Teil ausgeführt werden. Da Verschleiß der Extruderschnecke nicht vermieden werden kann, muss daher der Abstand der in dieser Schrift erwähnten stationären Messer größer als üblich gewählt werden, um eine Kollision der rotierenden Messer mit den stationären Messern zu verhindern. Dies führt wiederum zu einer erhöhten thermischen Belastung des Materials durch Walken und kann sogar bis zum Aufschmelzen des Materials, insbesonders bei thermisch sensiblen Materialien wie LLDPE-Stretch-Film, gehen.

Die Idee als solche, eine Extruderschnecke bloß an der Innenwand des sie umgebenden Gehäuses zu lagern, war bereits lange vor dem Anmeldetag der AT 407971 bekannt, beispielsweise aus den folgenden Druckschriften: DE 26 56 484 A1, DE 23 51 328 A1, DE 31 19 840 A1, DE 23 10 463 B2, DE 12 61 661 B.

Aus JP 2000176935, JP 2001038728, JP 2000169859 (Abbildungen) und aus WO 01/47678 ist eine Vorrichtung bekannt, bei der das Material axial aus der Zerkleinerungseinrichtung ausgetragen wird und dann in 90° zur Mittelline der messertragenden Welle einem Extruder übergeben wird, wobei das dem Antrieb gegenüberliegende Lager am Ende der Förderschnecke liegt und ein die Förderschnecke umgebendes Rohr eine nach unten gerichtete Öffnung hat. Nachteilig wirkt sich bei dieser Konstruktion aus, dass das Material durch die Kompression der Förderschnecke direkt in Richtung des Lagers gedrückt wird und somit die Abdichtung des Lagers gegenüber Staub und Verunreinigungen einen erheblichen Aufwand darstellt und darüber hinaus die Umlenkung des Materials zum Extruder eine thermische Mehrbelastung des Materials hervorruft und somit zu erhöhten Abbauwerten führt.

Aus EP 0 514 327 A1 ist eine Vorrichtung bekannt, bei der das Material mittels einer unter der messertragenden Zerkleinerungseinrichtung angeordneten Förderschnecke ausgetragen wird. Diese Förderschnecke fördert jedoch in das Freie, somit wird kein oder ein nur sehr geringer Gegendruck aufgebaut, und somit kommt es auch zu keinem Auslenken der Schnecke. Wäre bei dieser Vorrichtung an die Förderschnecke direkt eine Extruderschnecke angeschlossen, würden dieselben oben beschriebenen Nachteile auftreten.

Alle oben genannten Vorrichtungen haben den Nachteil, dass durch die Materialübergabe von der messertragenden Zerkleinerungseinrichtung auf die Förder- oder Extruderschnecke erhöhte Auslenkkräfte auftreten, die zur Mittelline der hintereinander angeordneten Zerkleinerungs- und Extruderwellen normal gerichtet sind und daher bei Verzicht auf eine zusätzliche austragsseitige Lagerung zu einem erhöhten Verschleiß im Einzugsbereich des Extruders oder der Förderschnecke führen, bzw. die bekannten Ausführungen austragsseitiger Lagerungen zu erheblichen Einschränkungen des Materialtransports oder zu einer erhöhten thermischen Belastung des Materials führen.

Die vorliegende Erfindung bietet eine Lösung für die erläuterten Probleme, indem eine Vorrichtung gemäß dem Oberbegriff des beiliegenden Anspruchs 1 solcherart fortgebildet wird, dass der Zerkleinerungs/Förder-Rotorkörper als an der dem Extruder gegenüberliegenden Stirnseite offener Hohlkörper ausgebildet ist und zumindest ein Drehlager in seinem Innenraum aufweist, das auf einem von der offenen Stirnseite in den Innenraum des Zerkleinerungs/Förder-Rotorkörpers ragenden Widerlagerkörper aufruht.

Durch diese erfindungsgemäße Lösung der Anordnung von Lagern, insbesonders das dem Antrieb gegenüberliegende Lager, an der Innenseite des Zerkleinerungs/Förder-Rotorkörpers müssen in Bezug auf Steifigkeit der Lagerung keine Abstriche mehr gemacht werden und wird der Verschleiß des Einzugbereiches des Extruders beträchtlich reduziert. Der Übergabebereich zwischen Zerkleinerungs/Förder-Rotorkörper und Extruderschnecke ist darüber hinaus frei von den Materialtransport behindernden Stegen oder Abstützungen. Weiters kann der Zerkleinerungs/Förder-Rotorkörper an seiner Innenseite flüssigkeitsgekühlt werden.

In dem Dokument EP 0 329 934 A2 ist ein Extruder mit einer geteilten Extruderschnecke offenbart, wobei die einzelnen Schneckenteile unabhängig voneinander rotierbar sind. Das in Bezug auf die Austragsöffnung hintere Schneckenteil ist hohl ausgeführt und nimmt in seinem Inneren eine rotierende Welle auf, die an ihrem vorderen Ende mit dem vorderen Schneckenteil drehfest verbunden ist. Das vordere Schneckenteil wird nur von der Welle getragen, die im hinteren Schneckenteil mittels eines Axiallagers gelagert ist Somit bildet das hintere Schneckenteil ein Widerlager für das Axiallager der Welle und damit auch ein Widerlager für das vordere Schneckenteil. Dieser Extruder weist jedoch keinen separaten Widerlagerkörper für den hinteren Schneckenteil auf.

Vorteilhafte Ausgestaltungen der Erfindung sind in den Unteransprüchen dargelegt.

Eine besonders leichte Wartbarkeit der Vorrichtung und Erleichterung des Austauschs von Teilen ergibt sich, wenn der Widerlagerkörper von der Gehäuseaußenseite durch eine Öffnung im Gehäuse hindurch in den Hohlraum des Zerkleinerungs/Förder-Rotorkörpers einführbar ist. Platzsparende Bauweise und leichte Wartbarkeit ist durch eine Ausgestaltung erzielbar, bei der der Widerlagerkörper ein an beiden Enden offener Hohlkörper ist, durch dessen Innenraum eine Antriebswelle der Extruderschnecke hindurchführt. Diese Bauweise ermöglicht es auch, die Antriebswelle der Extruderschnecke im Innenraum des Widerlagerkörpers zu lagern.

Die Erfindung bietet verschiedene Antriebsmöglichkeiten für den Zerkleinerungs/Förder-Rotorkörper und die Extruderschnecke. So können der Zerkleinerungs/Förder-Rotorkörper und die Extruderschnecke über einen gemeinsamen Antriebsmotor angetrieben werden, wobei fakultativ getrennte Übersetzungen zur Erzielung unterschiedlicher Umdrehungsgeschwindigkeiten vorgesehen sein können. Alternativ dazu können der Zerkleinerungs/Förder-Rotorkörper und die Extruderschnecke getrennte Antriebe besitzen, was weitreichende Steuerungsmöglichkeiten bietet.

Um eine stets ausreichende Materialzuführung zu gewährleisten, ist in einer Fortbildung der Erfindung eine bewegliche Anpresseinrichtung vorgesehen, mit der zugeführte Materialien gegen den Zerkleinerungs/Förder-Rotorkörper gepresst werden. Diese Anpresseinrichtung kann elektrisch oder hydraulisch betätigt werden und bietet vorzugsweise eine Steuerung in Abhängigkeit der Belastung des Zerkleinerungs/Förder-Rotorkörpers, wobei die Belastung über Druckmesszellen oder die Antriebsmotor-Stromaufnahme ermittelt werden kann.

Um die Materialförderung entlang der Drehachse des Zerkleinerungs/Förder-Rotorkörpers zu unterstützen, sind gegebenenfalls im den Zerkleinerungs/Förder-Rotorkörper umgebenden Gehäuseabschnitt entsprechende Einrichtungen vorgesehen, insbesondere spiralförmige Stege oder Nuten, und/oder Luftdüsen.

Zur verbesserten Materialverdichtung kann zwischen Zerkleinerungs/Förder-Rotorkörper und Extruder ein konisch zulaufender, vorzugsweise gekühlter Verdichtungsabschnitt zwischengeschaltet sein. Im Verdichtungsabschnitt ist bevorzugt ein Temperatursensor zur Messung der Innenwandtemperatur des Verdichtungsabschnitts oder der Temperatur des hindurchgeführten Materials vorgesehen, wobei die Materialdurchflussmenge in Abhängigkeit der gemessenen Temperatur und gegebenenfalls der Belastung des Zerkleinerungs/Förder-Rotorkörpers gesteuert wird. In weiterer Ausgestaltung erfolgt die Steuerung der Materialdurchflussmenge über einen Schieber am Eingang des Verdichtungsabschnitts.

Vorzugsweise ist der Zerkleinerungs/Förder-Rotorkörper ein zylindrischer oder konischer Körper, wobei im letzteren Fall zusätzliche Verdichtung des geförderten Materials erzielt werden kann.

Gemäß einer bevorzugten Ausgestaltung der Erfindung ist der Zerkleinerungs/Förder-Rotorkörper als Zerkleinerungswelle ausgebildet, die eine Vielzahl von Messern an ihrem Umfang trägt, die mit rotationsfest am Gehäuse angeordneten Gegenmessern schmale Scherspalte bilden.

Nach einer alternativen Ausführungsform der Erfindung ist der Zerkleinerungs/Förder-Rotorkörper als Förderschnecke ausgebildet. Dabei kann achsparallel oder im Winkel zur Förderschnecke eine Zerkleinerungswelle vorgeschaltet sein, die eine Vielzahl von Messern an ihrem Umfang trägt, die vorzugsweise mit rotationsfest am Gehäuse angeordneten Gegenmessern schmale Scherspalte bilden. Um nur zerkleinertes Material mit definierter Maximalgröße zur Förderschnecke zuzuführen, wird zwischen Zerkleinerungswelle und Förderschnecke ein Sieb vorgesehen.

Die Erfindung wird nun in nicht einschränkenden Ausführungsbeispielen anhand der Zeichnungen näher erläutert. Es zeigen jeweils im Längsschnitt Fig. 1 eine Ausführung mit Zerkleinerungswelle und nachgeschaltetem Extruder, Fig. 2 eine Ausführung mit Zerkleinerungswelle und Extruder mit herausgeführter Extruderwelle, Fig. 3 eine Ausführung mit zwei getrennten Antrieben für die Zerkleinerungswelle und den Extruder, und Fig. 4 eine Ausführung mit vorgeschaltetem Einwellenzerkleinerer und nachfolgender Förderschnecke, Verdichtungsschnecke und Extruder.

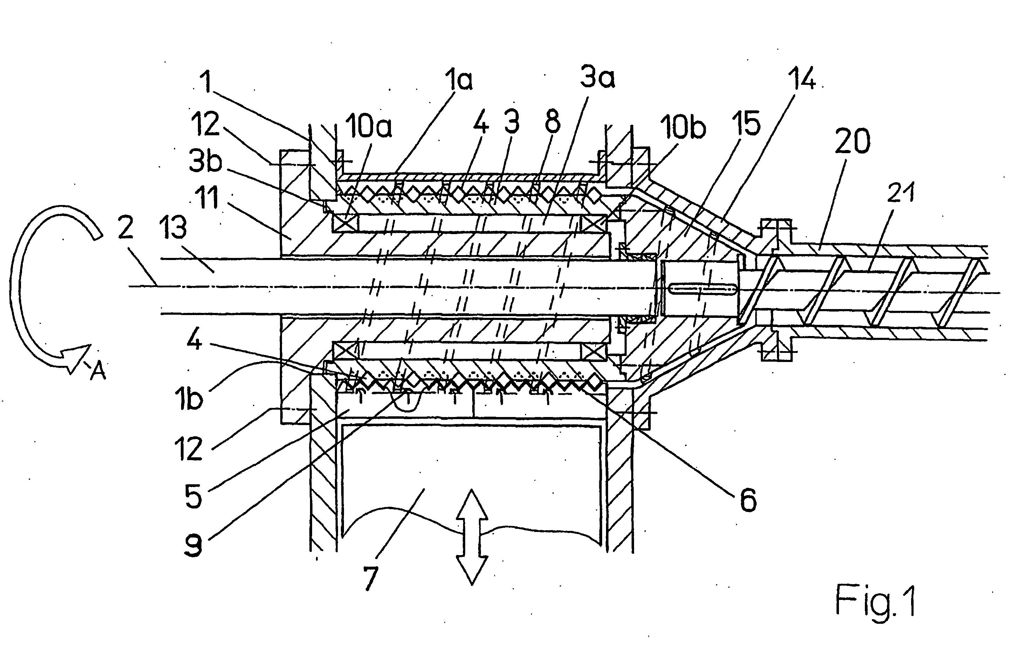

Zunächst auf Fig. 1 Bezug nehmend, ist darin eine erste Ausführungsform der erfindungsgemäßen Vorrichtung zur Verdichtung lose gepackter Materialien, insbesondere Kunststoffmaterialien, im Längsschnitt dargestellt. Diese Vorrichtung umfasst ein Gehäuse 1, 1a, in dem ein Zerkleinerungs/Förder-Rotorkörper in Form einer Zerkleinerungswelle 3 um eine Rotationsachse 2 drehbar angeordnet ist (Pfeil A). Die Zerkleinerungswelle 3 weist an ihrer Umfangsfläche eine Vielzahl von gegeneinander versetzten Messern 4 auf, die spiralförmig um den Umfang angeordnet sein können. Den rotierenden Messern 4 stehen sich vom Gehäuse 1a nach innen erstreckende feststehende Messer 5 gegenüber, so dass zwischen den Messern 4 und 5 schmale Scherspalte 6 gebildet werden.

In bekannter Weise und daher nicht dargestellt wird zu zerkleinerndes Material der Zerkleinerungswelle 3 mittels geeigneter Fördereinrichtungen wie Förderbänder, Rolleneinzug, Hub-Kipp-Gerät oder manueller Beschickung über einen Aufgabetrichter zugeführt. Das Material kann dabei mittels Schwerkraft oder - wie in Fig. 1 gezeigt -einer Anpressvorrichtung in Form eines Anpressschiebers 7 radial gegen die Zerkleinerungswelle 3 gepresst werden, wodurch das Material in die Scherspalte 6 gezogen und zwischen den rotierenden und den stehenden Messern 4, 5 zerkleinert wird. Der Anpressschieber 7 ist hydraulisch oder elektrisch radial zur Zerkleinerungswelle 3 beweglich. Die Messer 4 sind spiralförmig angeordnet und bewirken somit einen axialen Austrag des zerkleinerten Materials. Die Axialförderwirkung wird durch an der Gehäuseinnenseite angebrachte Spiralstege 8 oder (nicht dargestellte) Spiralnuten verstärkt, die das Material am Mitdrehen mit der Zerkleinerungswelle hindern und gleichzeitig dem Material eine Bewegungskomponente in Austragsrichtung hin verleihen. Eine weitere Verstärkung der axialen Materialförderung wird durch Luftdüsen 9 erzielt.

Die Zerkleinerungswelle 3 ist als an der dem Extruder gegenüberliegenden Stirnseite (bei 3b) offener Hohlkörper mit einem Innenraum 3a ausgebildet. In diesem Innenraum sind zwei Drehlager 10a, 10b angeordnet, die auf dem Umfang eines in den Innenraum 3a ragenden Widerlagerkörper 11 aufruhen und somit die Zerkleinerungswelle drehbar stützen, wodurch die vom angepressten Material ausgeübten Radialkräfte wirkungsvoll aufgenommen, aber nicht auf die nachfolgende Extruderschnecke 21 übertragen werden.

Der Widerlagerkörper 11 wiederum ist von der Außenseite des Gehäuses 1 durch eine Öffnung 1b im Gehäuse hindurch in den Innenraum 3a der Zerkleinerungswelle 3 geführt und mittels Schrauben 12 mit dem Gehäuse 1 verschraubt. Somit lässt sich die Vorrichtung leicht zerlegen, um Teile wie z.B. die Lager 10a, 10b auszutauschen.

Der Zerkleinerungswelle nachgeschaltet sind ein Verdichtungsabschnitt 14, der am Gehäuse 1 angeflanscht ist, und ein Extruder 20, der am Ausgang des Verdichtungsabschnitts angeflanscht ist. Im Verdichtungsabschnitt ist eine konische Verdichterschnecke 15 angeordnet, die um die Rotationsachse 2 drehbar ist. Im Extruder 20 ist eine Extruderschnecke 21 angeordnet, die ebenfalls um die Rotationsachse 2 drehbar ist. Zerkleinerungswelle 3, Verdichterschnecke 15 und Extruderschnecke 21 sind somit koaxial angeordnet. Die Verdichterschnecke 15 und die Extruderschnecke 21 sind über eine Keilwellenverbindung o.dgl. starr miteinander verbunden. Weiters ist eine Antriebswelle 13 mit der Verdichterschnecke 15 starr verbunden. Die Antriebswelle 13 ragt durch den als Hohlkörper ausgebildeten Widerlagerkörper 11 hindurch und aus dem Gehäuse 1 heraus und ist mit einem nicht dargestellten Antriebsmotor verbunden. Mit der Verdichtungsschnecke 15 ist auch die Zerkleinerungswelle 3 starr verbunden. Somit treibt die Antriebswelle 13 über die Verdichtungsschnecke 15 sowohl die Zerkleinerungswelle 3 als auch die Extruderschnecke 21 an.

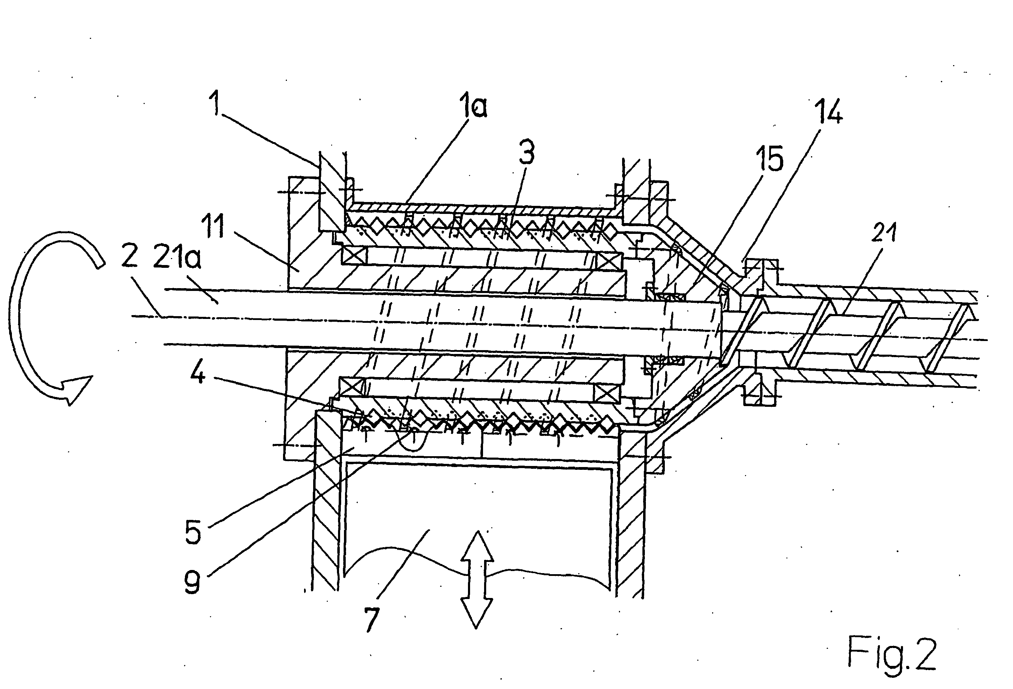

Fig. 2 zeigt im Längsschnitt eine weitere Ausführungsform einer erfindungsgemäßen Zerkleinerungs- und Verdichtungsvorrichtung, die sich von der in Fig. 1 dargestellten nur insofern unterscheidet, als anstelle einer Antriebswelle für die Verdichtungsschnecke 15 die Extruderwelle 21a der Extruderschnecke 21 durch den Innenraum des hohlen Widerlagerkörpers 11 hindurch aus dem Gehäuse herausgeführt ist. Dabei ist die Extruderwelle 21a starr mit der Verdichtungsschnecke 15 verbunden und treibt daher auch sie sowie die Zerkleinerungswelle 3, die mit der Verdichtungsschnecke 15 starr verbunden ist, an. Die übrigen Teile und Bezugszeichen entsprechen jenen in Fig. 1; auf eine erneute Besprechung kann daher verzichtet werden.

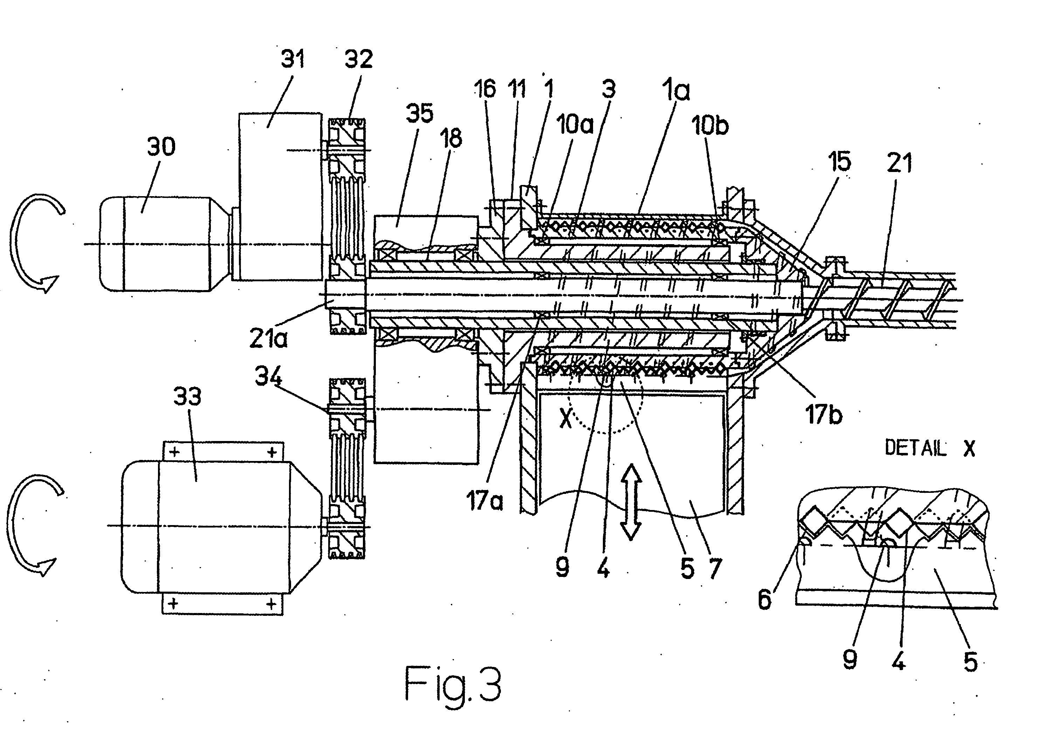

Fig. 3 zeigt eine weitere Ausführungsform der erfindungsgemäßen Zerkleinerungs- und Verdichtungsvorrichtung im Längsschnitt. Diese unterscheidet sich durch die folgenden Merkmale von der Ausführungsform von Fig. 2. Die Extruderschnecke 21 und die Zerkleinerungswelle 3 werden über getrennte Antriebszüge angetrieben. Genauer gesagt wird die Extruderwelle 21a über ein Transmissionselement 32 und ein Getriebe 31 von einem Elektromotor 30 angetrieben. Die Zerkleinerungswelle 3 und die mit ihr starr verbundene Verdichtungsschnecke 15 werden über eine Antriebswelle 18, ein Getriebe 35 und ein Transmissionselement 34 von einem Elektromotor angetrieben, wobei das Getriebe 35 über einen Flansch 16 mit dem Widerlagerkörper 11 verbunden ist. Die Antriebswelle 18 ist eine Hohlwelle, die an einem Ende in Keilnutverbindung an die Verdichtungsschnecke 15 angeschlossen ist und deren anderes Ende sich durch den Widerlagerkörper 11 aus dem Gehäuse 1 erstreckt. Die Extruderwelle 21 a erstreckt sich durch die hohle Antriebswelle 18 hindurch aus dem Gehäuse 1 heraus und ist mittels Lagern 17a, 17b an der Innenseite der Antriebswelle 18 drehbar gelagert.

Detail X von Fig. 3 zeigt in vergrößerter Darstellung die rotierenden Messer 4 der Zerkleinerungswelle, die feststehenden Messer 5, den dazwischen gebildeten Scherspalt 6 und eine Luftdüse 9 zur Unterstützung des Materialtransports.

Die übrigen Teile der Ausführungsform von Fig. 3 stimmen mit jenen der Figuren 1 und 2 überein und sind daher mit denselben Bezugszeichen versehen. Bezüglich ihrer Erklärung wird auf die obige Beschreibung verwiesen.

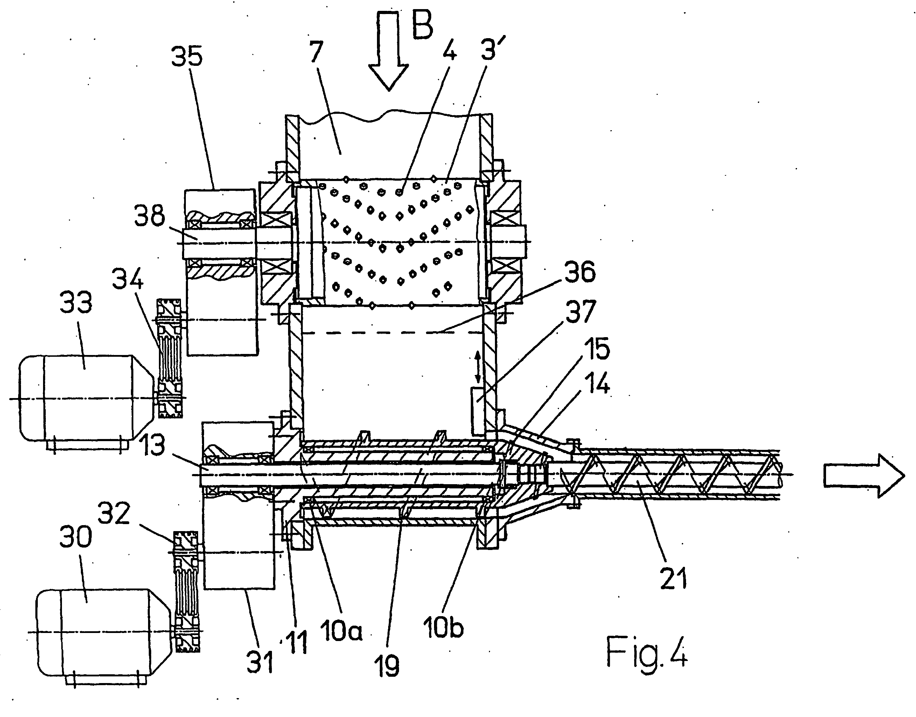

In Fig. 4 ist eine weitere erfindungsgemäße Ausführungsform dargestellt. Diese unterscheidet sich insofern von den bisher erläuterten Ausführungsformen, als der Zerkleinerungs/Förder-Rotorkörper als Förderschnecke 19 ausgebildet ist, die an einem Ende einstückig und koaxial in die Verdichterschnecke 15 übergeht. Die Förderschnecke 19 ist ein Hohlkörper, in dessen Innenraum wie bei den obigen Ausführungen Lager 10a, 10b angeordnet sind, die drehbar auf dem Widerlagerkörper 11 aufruhen, der in den Innenraum der Förderschnecke 19 ragt. Eine Antriebswelle 13 erstreckt sich durch den Widerlagerkörper 11 und ist an einem Ende sowohl mit der Verdichtungsschnecke 15 als auch der Extruderschnecke 21 starr verbunden, um diese Elemente anzutreiben. Die Antriebswelle 13 ist an ihrem anderen Ende (wie Welle 21a in Fig. 3) mit dem Getriebe 31 verbunden, das wiederum über das Transmissionselement 32 vom Elektromotor 30 angetrieben wird. Achsparallel, aber beabstandet von der Förderschnecke 19 ist eine Zerkleinerungswelle 3' mit ihren rotierenden Messern 4 angeordnet und wird über die Welle 38, das Getriebe 35, das Transmissionselement 34 vom Elektromotor 33 angetrieben. Zu zerkleinerndes Kunststoffmaterial wird in Richtung von Pfeil B und mit der Unterstützung durch den Anpressschieber 7 der Zerkleinerungswelle 3' zugeführt und von ihr zerkleinert. Ein Sieb 36 unterhalb der Zerkleinerungswelle 3' sorgt dafür, dass nur zerkleinerte Partikel mit einer bestimmten Maximalgröße zur darunter befindlichen Förderschnecke 19 gelangen können. Ein nicht dargestellter Temperatursensor im Verdichtungsabschnitt 14 misst die Innenwandtemperatur des Verdichtungsabschnitts und gibt die Messwerte an einen nicht dargestellten Regler weiter, der in Abhängigkeit dieser Temperatur und gegebenenfalls anderer Maschinenparameter die Materialdurchflussmenge steuert, indem er durch Betätigung eines Einzugsschiebers 37 die lichte Weite des Einzugsbereichs der Verdichtungsschnecke 15 vergrößert oder verkleinert.

## Patentansprüche

1. Vorrichtung zur Verdichtung lose gepackter Materialien, insbesondere Kunststoffmaterialien, mit einem in einem Gehäuse (1, 1a) angeordneten, zur Drehbewegung um eine Rotationsachse (2) antreibbaren Zerkleinerungs/Förder-Rotorkörper (3, 19) und einem nachgeschalteten Extruder (20) mit einer koaxial zum Zerkleinerungs/Förder-Rotorkörper (3, 19) drehbar angeordneten Extruderschnecke (21), so dass dem Zerkleinerungs/Förder-Rotorkörper (3. 19) zugeführte Materialien zur Extruderschnecke (21) hin gefördert und gegebenenfalls dabei zerkleinert werden, **dadurch gekennzeichnet, dass** der Zerkleinerungs/Förder-Rotorkörper (3, 19) als an der dem Extruder (20) gegenüberliegenden Stirnseite (3b) offener Hohlkörper ausgebildet ist und zumindest ein Drehlager (10a, 10b) in seinem Innenraum (3a) aufweist, das auf einem von der offenen Stirnseite in den Innenraum (3a) des Zerkleinerungs/Förder-Rotorkörpers (3, 19) ragenden feststehenden Widerlagerkörper (11) aufruht.

2. Vorrichtung nach Anspruch 1, **dadurch gekennzeichnet, dass** der Widerlagerkörper (11) von der Gehäuseaußenseite durch eine Öffnung (1b) im Gehäuse (1) hindurch in den Hohlraum des Zerkleinerungs/Förder-Rotorkörpers (3, 19) einführbar ist.

3. Vorrichtung nach Anspruch 1 oder 2, **dadurch gekennzeichnet, dass** der Widerlagerkörper (11) ein an beiden Enden offener Hohlkörper ist, durch dessen Innenraum eine Antriebswelle (13, 21a) der Extruderschnecke (21) hindurchführt.

4. Vorrichtung nach Anspruch 3, **dadurch gekennzeichnet, dass** die Antriebswelle (21 a) der Extruderschnecke (21) im Innenraum des Widerlagerkörpers (11) gelagert (17a, 17b) ist.

5. Vorrichtung nach einem der Ansprüche 1 bis 4, **dadurch gekennzeichnet, dass** der Zerkleinerungs/Förder-Rotorkörper (3, 19) und die Extruderschnecke (21) über einen gemeinsamen Antriebsmotor angetrieben werden.

6. Vorrichtung nach Anspruch 5, **dadurch gekennzeichnet, dass** der Zerkleinerungs/Förder-Rotorkörper (3, 19) und die Extruderschnecke (21) über getrennte Übersetzungen angetrieben werden.

7. Vorrichtung nach einem der Ansprüche 1 bis 4, **dadurch gekennzeichnet, dass** der Zerkleinerungs/Förder-Rotorkörper (3, 19) und die Extruderschnecke (21) getrennte Antriebe (30, 31, 32; 33, 34, 35) besitzen.

8. Vorrichtung nach einem der vorhergehenden Ansprüche, **dadurch gekennzeichnet, dass** eine bewegliche Anpresseinrichtung (7) vorgesehen ist, um zugeführte Materialien gegen den Zerkleinerungs/Förder-Rotorkörper (3, 19) zu pressen.

9. Vorrichtung nach Anspruch 8, **dadurch gekennzeichnet, dass** die Anpresseinrichtung (7) in Abhängigkeit der Belastung des Zerkleinerungs/Förder-Rotorkörpers (3, 19) steuerbar ist, wobei vorzugsweise die Belastung über Druckmesszellen oder die Antriebsmotor-Stromaufnahme ermittelt wird.

10. Vorrichtung nach einem der vorhergehenden Ansprüche, **dadurch gekennzeichnet, dass** im den Zerkleinerungs/Förder-Rotorkörper (3, 19) umgebenden Gehäuseabschnitt Einrichtungen zur Unterstützung der Materialförderung vorgesehen sind, insbesondere spiralförmige Stege (8) oder Nuten, und/oder Luftdüsen (9).

11. Vorrichtung nach einem der vorhergehenden Ansprüche, **dadurch gekennzeichnet, dass** der Zerkleinerungs/Förder-Rotorkörper (3, 19) an seiner Innenseite flüssigkeitsgekühlt ist.

12. Vorrichtung nach einem der vorhergehenden Ansprüche, **dadurch gekennzeichnet, dass** zwischen Zerkleinerungs/Förder-Rotorkörper (3, 19) und Extruder (20) ein konisch zulaufender, vorzugsweise gekühlter Verdichtungsabschnitt (14) zwischengeschaltet ist.

13. Vorrichtung nach Anspruch 12, dass im Verdichtungsabschnitt (14) ein Temperatursensor zur Messung der Innenwandtemperatur des Verdichtungsabschnitts oder der Temperatur des hindurchgeführten Materials vorgesehen ist und die Materialdurchflussmenge in Abhängigkeit der gemessenen Temperatur und gegebenenfalls der Belastung des Zerkleinerungs/Förder-Rotorkörpers (3, 19) gesteuert wird, wobei vorzugsweise die Steuerung der Materialdurchflussmenge über einen Schieber (37) am Eingang des Verdichtungsabschnitts erfolgt.

14. Vorrichtung nach einem der vorhergehenden Ansprüche, **dadurch gekennzeichnet, dass** der Zerkleinerungs/Förder-Rotorkörper ein zylindrischer (3, 19) oder konischer Körper ist.

15. Vorrichtung nach einem der vorhergehenden Ansprüche, **dadurch gekennzeichnet, dass** der Zerkleinerungs/Förder-Rotorkörper als Zerkleinerungswelle (3) ausgebildet ist, die eine Vielzahl von Messern (4) an ihrem Umfang trägt, die mit rotationsfest am Gehäuse (1a) angeordneten Gegenmessern (5) schmale Scherspalte (6) bilden.

16. Vorrichtung nach einem der Ansprüche 1 bis 14, **dadurch gekennzeichnet, dass** der Zerkleinerungs/Förder-Rotorkörper als Förderschnecke (19) ausgebildet ist.

17. Vorrichtung nach Anspruch 16, **dadurch gekennzeichnet, dass** achsparallel oder im Winkel zur Förderschnecke (19) eine Zerkleinerungswelle (3') vorgeschaltet ist, die eine Vielzahl von Messern (4) an ihrem Umfang trägt, die vorzugsweise mit rotationsfest am Gehäuse angeordneten Gegenmessern schmale Scherspalte bilden.

18. Vorrichtung nach Anspruch 17, **dadurch gekennzeichnet, dass** zwischen Zerkleinerungswelle (3') und Förderschnecke (19) ein Sieb (36) vorgesehen ist.

## Claims

1. A device for compacting loosely packed materials, in particular synthetic materials, comprising a shredder/conveyor rotor body (3, 19) arranged in a casing (1, 1a) and rotatably drivable around an axis of rotation (2) and a consecutively arranged extruder (20) with an extruder screw (21) that is arranged rotatably and coaxially to the shredder/conveyor rotor body (3, 19) so that materials supplied to the shredder/conveyor rotor body (3, 19) are conveyed to the extruder screw (21), whereby they optionally are shredded, **characterized in that** the shredder/conveyor rotor body (3, 19) is configured as a hollow body open at the front side (3b) opposite the extruder (20) and has at least one rotary bearing (10a, 10b) in its interior (3a), which rotary bearing rests on a stationary abutment body (11) projecting from the open front side into the interior (3a) of the shredder/conveyor rotor body (3, 19).

2. A device according to claim 1, **characterized in that** the abutment body (11) is insertible from the outside of the casing through an opening (1b) in the casing (1) into the hollow space of the shredder/conveyor rotor body (3, 19).

3. A device according to claim 1 or 2, **characterized in that** the abutment body (11) is a hollow body open at both ends, through the interior of which a drive shaft (13, 21a) of the extruder screw (21) passes.

4. A device according to claim 3, **characterized in that** the drive shaft (21a) of the extruder screw (21) runs on bearings (17a, 17b) in the interior of the abutment body (11).

5. A device according to any of claims 1 to 4, **characterized in that** the shredder/conveyor rotor body (3, 19) and the extruder screw (21) are driven via a common drive motor.

6. A device according to claim 5, **characterized in that** the shredder/conveyor rotor body (3, 19) and the extruder screw (21) are driven via separate transmissions.

7. A device according to any of claims 1 to 4, **characterized in that** the shredder/conveyor rotor body (3, 19) and the extruder screw (21) possess separate drives (30, 31, 32; 33, 34, 35).

8. A device according to any of the preceding claims, **characterized in that** a movable pressing device (7) is provided for pressing supplied materials against the shredder/conveyor rotor body (3, 19).

9. A device according to claim 8, **characterized in that** the pressing device (7) is controllable depending on the load onto the shredder/conveyor rotor body (3, 19), whereby the load is preferably determined via pressure gauges or the current consumption of the drive motor.

10. A device according to any of the preceding claims, **characterized in that**, in the part of the casing surrounding the shredder/conveyor rotor body (3, 19), devices for supporting the material delivery are provided, in particular helical webs (8) or grooves and/or air nozzles (9).

11. A device according to any of the preceding claims, **characterized in that** the shredder/conveyor rotor body (3, 19) is liquid-cooled on its inside.

12. A device according to any of the preceding claims, **characterized in that** a tapered, preferably cooled compacting section (14) is interposed between the shredder/conveyor rotor body (3, 19) and the extruder (20).

13. A device according to claim 12, **characterized in that**, in the compacting section (14), a temperature sensor for measuring the inner wall temperature of the compacting section or the temperature of the material passed through is provided and the material flow rate is regulated depending on the measured temperature and optionally on the load onto the shredder/conveyor rotor body (3, 19), whereby the material flow rate is preferably regulated by means of a slide (37) at the input of the compacting section.

14. A device according to any of the preceding claims, **characterized in that** the shredder/conveyor rotor body is a cylindrical (3, 19) or conical body.

15. A device according to any of the preceding claims, **characterized in that** the shredder/conveyor rotor body is configured as a shredder shaft (3) carrying a plurality of knives (4) at its periphery which form narrow shear gaps (6) together with counter knives (5) arranged at the casing (1a) in a rotationally stationary manner.

16. A device according to any of claims 1 to 14, **characterized in that** the shredder/conveyor rotor body is configured as a feed screw (19).

17. A device according to claim 16, **characterized in that** a shredder shaft (3') is provided upstream in parallel to the axis or at an angle to the feed screw (19), which shaft carries a plurality of knives (4) at its periphery which preferably form narrow shear gaps together with counter knives arranged at the casing in a rotationally stationary manner.

18. A device according to claim 17, **characterized in that** a screen (36) is provided between the shredder shaft (3') and the feed screw (19).

## Revendications

1. Dispositif pour compacter des matériaux en vrac, en particulier des matériaux en plastique, comprenant un corps rotatif de transport et de fragmentation (3, 19) disposé dans un carter (1, 1a), pouvant être entraîné pour le mouvement de rotation autour d'un axe de rotation (2) et une extrudeuse située en aval (20) avec une vis d'extrudeuse (21) disposée de manière à pouvoir tourner coaxialement au corps rotatif de transport et de fragmentation (3, 19), de telle manière que des matériaux amenés au corps rotatif de transport et de fragmentation (3, 19) sont transportés à la vis d'extrudeuse (21) en étant fragmentés éventuellement, **caractérisé en ce que** le corps rotatif de transport et de fragmentation (3, 19) est conçu comme un corps creux ouvert du côté frontal (3b) opposé à l'extrudeuse (20) et comporte dans son espace intérieur (3a) au moins un palier de pivotement (10a, 10b) qui repose sur un corps de palier de butée fixe (11) pénétrant à partir du côté frontal ouvert dans l'espace intérieur (3a) du corps rotatif de transport et de fragmentation (3, 19).

2. Dispositif selon la revendication 1, **caractérisé en ce que** le corps de palier de butée (11) peut être introduit, à partir du côté extérieur du carter, par une ouverture (1b) dans le carter (1), dans l'espace creux du corps rotatif de transport et de fragmentation (3, 19).

3. Dispositif selon la revendication 1 ou 2, **caractérisé en ce que** le corps de palier de butée (11) est un corps creux ouvert aux deux extrémités par l'espace intérieur duquel passe un arbre d'entraînement (13, 21a) de la vis d'extrudeuse (21).

4. Dispositif selon la revendication 3, **caractérisé en ce que** l'arbre d'entraînement (21a) de la vis d'extrudeuse (21) est logé ((17a, 17b) dans l'espace intérieur du corps de palier de butée (11).

5. Dispositif selon l'une des revendications 1 à 4, **caractérisé en ce que** le corps rotatif de transport et de fragmentation (3, 19) et la vis d'extrudeuse (21) sont entraînés par l'intermédiaire d'un moteur d'entraînement commun.

6. Dispositif selon la revendication 5, **caractérisé en ce que** le corps rotatif de transport et de fragmentation (3, 19) et la vis d'extrudeuse (21) sont entraînés par l'intermédiaire de transmissions séparées.

7. Dispositif selon l'une des revendications 1 à 4, **caractérisé en ce que** le corps rotatif de transport et de fragmentation (3, 19) et la vis d'extrudeuse (21) ont des entraînements séparés (30, 31, 32 ; 33, 34, 35).

8. Dispositif selon l'une quelconque des revendications précédentes, **caractérisé en ce qu'**il est prévu un dispositif de pression (7) mobile pour presser les matériaux amenés contre le corps rotatif de transport et de fragmentation (3, 19).

9. Dispositif selon la revendication 8, **caractérisé en ce que** le dispositif de pression (7) peut être commandé en fonction de la charge du corps rotatif de transport et de fragmentation (3, 19), la charge étant déterminée de préférence par l'intermédiaire de capteurs de pression ou de la puissance absorbée par le moteur d'entraînement.

10. Dispositif selon l'une quelconque des revendications précédentes, **caractérisé en ce qu'**il est prévu, dans le segment de carter entourant le corps rotatif de transport et de fragmentation (3, 19), des dispositifs destinés à aider au transport des matériaux, en particulier des nervures (8) ou des rainures hélicoïdales et/ou des buses d'air (9).

11. Dispositif selon l'une quelconque des revendications précédentes, **caractérisé en ce que** le corps rotatif de transport et de fragmentation (3, 19) est refroidi par un liquide sur sa face intérieure.

12. Dispositif selon l'une quelconque des revendications précédentes, **caractérisé en ce qu'**un segment de compression (14) se terminant en cône, de préférence refroidi, est intercalé entre corps rotatif de transport et de fragmentation (3, 19) et extrudeuse (20).

13. Dispositif selon la revendication 12, **caractérisé en ce qu'**il est prévu, dans le segment de compression (14), un capteur de température pour mesurer la température de paroi intérieure du segment de compression ou la température du matériau le traversant et que le débit de matériau est commandé en fonction de la température mesurée et éventuellement de la charge du corps rotatif de transport et de fragmentation (3, 19), la commande du débit de matériau ayant lieu de préférence par l'intermédiaire d'une vanne (37) à l'entrée du segment de compression.

14. Dispositif selon l'une quelconque des revendications précédentes, **caractérisé en ce que** le corps rotatif de transport et de fragmentation est un corps cylindrique (3, 19) ou conique.

15. Dispositif selon l'une quelconque des revendications précédentes, **caractérisé en ce que** le corps rotatif de transport et de fragmentation est conçu comme un arbre de fragmentation (3) qui porte une pluralité de couteaux (4) sur sa circonférence, lesquels forment avec des couteaux opposés (5) disposés de manière fixe sur le carter (1a) des interstices de cisaillement étroits (6).

16. Dispositif selon l'une quelconque des revendications 1 à 14, **caractérisé en ce que** le corps rotatif de transport et de cisaillement est conçu comme une vis de transport (19).

17. Dispositif selon la revendication 16, **caractérisé en ce qu'**un arbre de fragmentation (3') est monté en amont, dont l'axe est parallèle ou forme un angle avec la vis de transport (19) et qui porte sur sa circonférence une pluralité de couteaux (4) qui forment de préférence avec des couteaux opposés disposés de manière fixe sur le carter des interstices de cisaillement étroits.

18. Dispositif selon la revendication 17, **caractérisé en ce qu'**il est prévu un tamis (36) entre l'arbre de fragmentation (3') et la vis de transport (19).
